# EUROPEAN PATENT APPLICATION

(11) **EP 2 801 857 A1**
(43) Date of publication of application: **12.11.2014**
(21) Application number: 13196409.0
(22) Date of filing: 10.12.2013
(51) Int. Cl.: G02C 5/00, G02C 5/20, G02C 5/14

(54) **Suspendable and rotatingly foldable eyeglass frame**

(30) Priority: 07.05.2013 CN 201320239905 U
(71) Applicant: Action Eyewear Corp., 112 Taipei City (TW)
(72) Inventor: Ng, Choon Kheang, 05150 Alor Setar, Kedah, West Malaysia (MY)
(74) Representative: Viering, Jentschura & Partner Patent- und Rechtsanwälte

(57) **Abstract**

An eyeglass frame which can be suspended on a neck and rotatingly folded includes a rim structure (1), two temples (3) and two connection units (2). The rim structure (1) is connected by the two connection units (2) respectively to the two temples (3). A teeth structure (11) is integrally formed perpendicularly on each of the abovementioned ends of the rim structure (1). The lower end of each of the connection units (2) is formed with a flange structure for engaging with a teeth structure (11). The upper end of each of the connection units (2) is connected by hinge to a temple (3) front portion. Each of the temples (3) includes an outer temple (32) and an inner temple (31) respectively slidably embedded in the outer temple (32). The rear portions of the temples (3) have magnets (4) which mutually attract to form a loop structure. The rim structure (1) can rotate upward to adapt to the contour of the face, and is thinner when folded.

## Description

### BACKGROUND OF THE INVENTION

### 1. Field of the Invention

The present disclosure relates to an eyeglass frame; in particular, to a suspendable and foldable eyeglass frame which can be suspended on necks and rotatingly folded to reduce the thickness of the eyeglass frame.

### 2. Description of Related Art

Eyeglasses have become common products in everyday lives. With the advancement of eyeglass quality, demand for comfort and convenience of eyeglasses has also been raised. Traditional eyeglass frames mostly use single-hinge structures. Namely, each of the temples is connected by hinge to a rim structure such that the temple can be folded laterally toward the front of the eyeglass frame and rest parallel to the rim structure, such that the thickness of the folded eyeglass frame is the sum of the thickness of the rim structure itself, the length of the connection units and the thickness of the temples. Excessively thick eyeglass frames are difficult to store.

### SUMMARY OF THE INVENTION

The object of the present disclosure is to provide an eyeglass frame, in particular to a suspendable and foldable eyeglass frame which can be suspended on necks and rotatingly folded to reduce the thickness of the eyeglass frame.

In order to achieve the aforementioned objects, the present disclosure the present disclosure employs the following technical features. A suspendable and rotatingly foldable eyeglass frame includes a rim structure structure, two temples and two connection units. Two ends of the rim structure are respectively connected by the two connection units to the two temples. A teeth structure is integrally formed on each one of the abovementioned ends of the rim structure. The teeth structures are perpendicular to the rim structure. The lower end of each of the connection units is formed with a flange structure for engaging with a teeth structure. The upper end of each of the connection units is connected by hinge to a temple front portion. The rear portion of each of the temples has a magnet. Each of the temples includes an inner temple and an outer temple. The inner temples are respectively slidably embedded in the outer temples. The rear portion of each of the inner temples has a locking edge, and the interior of the front end of each of the outer temples has a locking groove. When each of the outer temple slides about the respective inner temple and the inner temple is pulled out of the outer temple, the locking edge and the locking groove interact to restrict the outer temple from sliding off of the inner temple.

The flange structure at the lower end of one of the connection units and the teeth structure at one of the two ends of the rim structure engage each other to form a quasi-hinge structure. Each of the temples can rotate longitudinally about the quasi-hinge structure upward for folding or downward for unfolding toward the front of the eyeglass frame.

The rim structure is mounted with lenses. The rim structure can rotate about the quasi-hinge structure upward for opening or downward for closing.

The outer temples are made of soft plastic. The magnets are inlaid respectively at the rear ends of the outer temples.

The magnets at the rear ends of the two temples mutually attract.

Each of the hinge structures connecting the front portion of one of the temples and the upper end of one of the connecting units enables the temple to fold or unfold about the hinge structure in a transverse direction toward the front of the eyeglass frame.

When the temples are unfolded, each of the outer temples can extend about the respective inner temples to form a longer temple. The magnets at the rear ends of the two temples can mutually attract to form a loop structure.

The present disclosure has the following advantageous effects. The present disclosure has hinge structures enabling rotation in different directions. The quasi-hinge structures are formed by the respective engagements between the flange structures at the lower ends of the connection units and the teeth structures at the two ends of the rim structure. Each of the temples can rotate longitudinally about the quasi-hinge structure upward for folding or downward for unfolding toward the front of the eyeglass frame. Likewise, when wearing the eyeglass frame, especially presbyopia eyeglasses, the user can rotate the rim structure about the quasi-hinge structure upward for opening or downward for closing, so that the user does not have to repeatedly take off and put on the eyeglass frame. More importantly, the quasi-hinge structure employs engagement between a teeth structure and a flange structure such that the temple is not loose and does not slide easily, increasing the stability of the quasi-hinge structure during rotation. The hinge structures connect the respective front portions of the temples and the upper ends of the connection units, such that the temples can fold or unfold about the hinge structures in a transverse direction toward the front of the eyeglass frame. There are two methods of folding the eyeglass frame. In the first method, the temples are first rotated upward longitudinally about the quasi-hinge structure, and then folded in a transverse direction about the hinge structures. The thickness of the eyeglass frame after folding by this method is only the thickness of the rim structure itself, facilitating the storage of the eyeglass frame. In the second method, the temples are folded in a transverse direction about the hinge structure as normal. Conveniently, when the temples are unfolded, the outer temples can slide about the respective inner temples and extend outward to form longer temples, and the magnets at the rear ends of the two temples mutually attract to form a loop structure suspendable on the neck, facilitating the taking on and off of presbyopia eyeglasses.

### BRIEF DESCRIPTION OF THE DRAWINGS

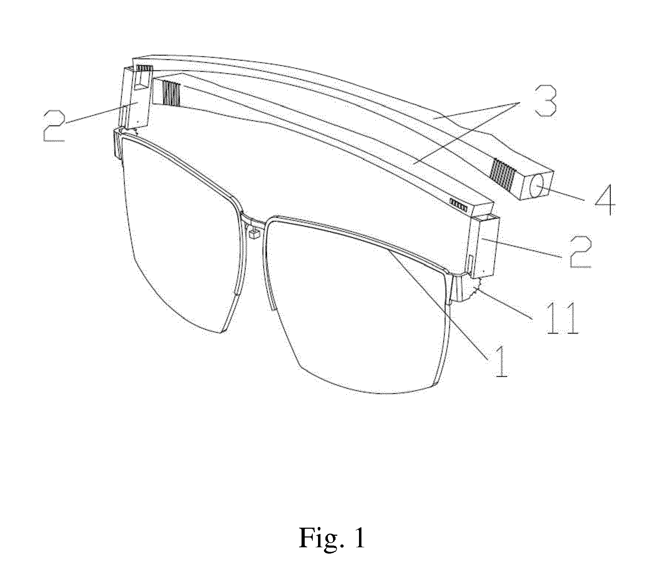

Fig. 1 shows a perspective view of the folded present disclosure using dual hinge structures;

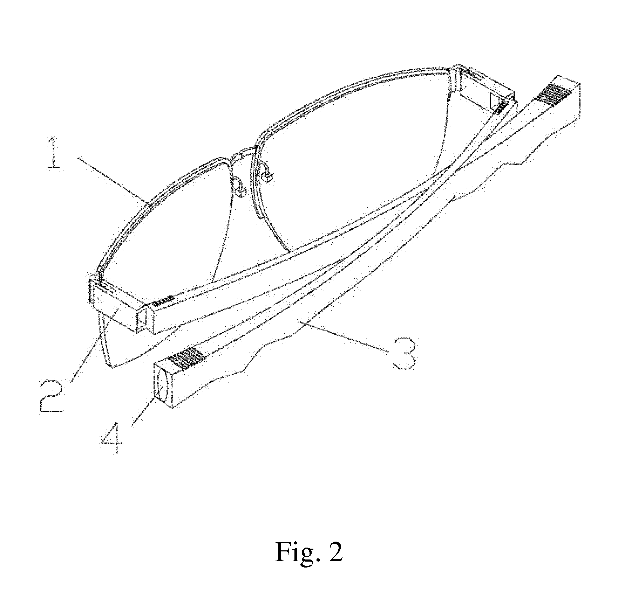

Fig. 2 shows a perspective view of the folded present disclosure using single hinge structures;

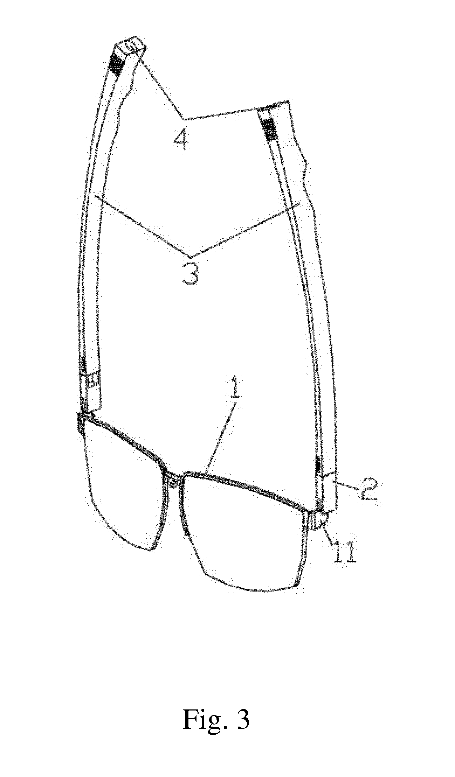

Fig. 3 shows a perspective view of the present disclosure having the temples rotated upward; and

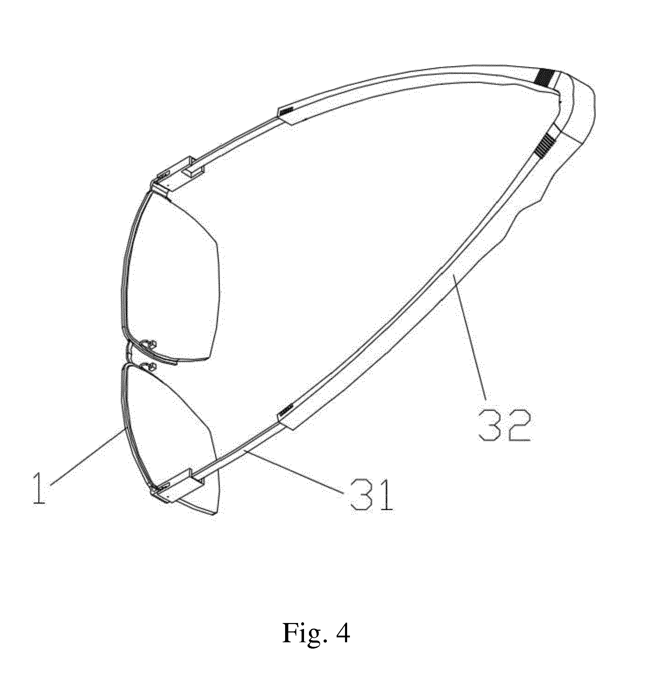

Fig. 4 shows a perspective view of the present disclosure forming a loop structure.

### DETAILED DESCRIPTION OF THE PREFERRED EMBODIMENTS

The aforementioned illustrations and following detailed descriptions are exemplary for the purpose of further explaining the scope of the present disclosure. Other objectives and advantages related to the present disclosure will be illustrated in the subsequent descriptions and appended drawings.

A suspendable and rotatingly foldable eyeglass frame includes a rim structure 1, two temples 3 and two connection units 2. Two ends of the rim structure 1 are respectively connected by the two connection units 2 to the two temples 3. A teeth structure 11 is integrally formed on each one of the abovementioned ends of the rim structure 1. The teeth structures 11 are perpendicular to the rim structure. The lower end of each of the connection units 2 is formed with a flange structure for engaging with a teeth structure 11. The upper end of each of the connection units 2 is connected by hinge to a temple 3 front portion. The rear portion of each of the temples 3 has a magnet 4. Each of the temples 3 includes an inner temple 31 and an outer temple 32. The inner temples 31 are respectively slidably embedded in the outer temples 32. The rear portion of each of the inner temples 31 has a locking edge, and the interior of the front end of each of the outer temples 32 has a locking groove. When each of the outer temple slides 32 about the respective inner temple 31 and the inner temple 31 is pulled out of the outer temple 32, the locking edge and the locking groove interact to restrict the outer temple 32 from sliding off of the inner temple 31.

The flange structure at the lower end of one of the connection units 2 and the teeth structure 11 at one of the two ends of the rim structure 1 engage each other to form a quasi-hinge structure. Each of the temples 3 can rotate longitudinally about the quasi-hinge structure upward for folding or downward for unfolding toward the front of the eyeglass frame. When folding the eyeglass frame, the user can rotate the temples 3 upright, and then fold the temples in a transverse direction. The thickness of the eyeglass frame folded by this method is only the thickness of the lenses or the thickness of the rim structure 1, drastically reducing the thickness of typical folded eyeglass frames. The rim structure 1 is mounted with lenses therein. The rim structure 1 can rotate about the quasi-hinge structure upward for opening or downward for closing. When wearing the eyeglass frame, especially presbyopia eyeglasses, the user can rotate the rim structure about the quasi-hinge structure upward for removing the lenses from the sight of the user. Unlike typical presbyopia eyeglasses, the user does not have to repeatedly take off and put on the eyeglass frame.

The outer temples 32 are made of soft plastic such as silicone, preventing allergic reactions and increasing the comfort for the user. The magnets 4 are inlaid respectively at the rear ends of the outer temples 32. The magnets 4 at the rear ends of the two temples 3 mutually attract. When the temples 3 are unfolded, each of the outer temples 32 can extend about the respective inner temples 31 to form a longer temple. The magnets 4 at the rear ends of the two temples 3 can mutually attract to form a loop structure. When not in use, the loop structure can be suspended on the neck of the user without being taken off, and no place need to be set aside for disposing the eyeglass frame. Each of the hinge structures connecting the front portion of one of the temples 3 and the upper end of one of the connecting units 2 enable the temple 3 to fold or unfold about the hinge structure in a transverse direction toward the front of the eyeglass frame.

The present disclosure has hinge structures enabling rotation in different directions. The quasi-hinge structures are formed by the respective engagements between the flange structures at the lower ends of the connection units 2 and the teeth structures 11 at the two ends of the rim structure 1. Each of the temples 3 can rotate longitudinally about the quasi-hinge structure upward for folding or downward for unfolding toward the front of the eyeglass frame. Likewise, when wearing the eyeglass frame, especially presbyopia eyeglasses, the user can rotate the rim structure 1 about the quasi-hinge structure upward for opening or downward for closing, so that the user does not have to repeatedly take off and put on the eyeglass frame. More importantly, the quasi-hinge structure employs engagement between a teeth structure and a flange structure such that the temple 3 is not loose and does not slide easily, increasing the stability of the quasi-hinge structure during rotation. The hinge structures connect the respective front portions of the temples 3 and the upper ends of the connection units 2, such that the temples 3 can fold or unfold about the hinge structures in a transverse direction toward the front of the eyeglass frame. There are two methods of folding the eyeglass frame. In the first method, the temples 3 are first rotated upward longitudinally about the quasi-hinge structure, and then folded in a transverse direction about the hinge structures. The thickness of the eyeglass frame after folding by this method is only the thickness of the rim structure 1 itself, facilitating the storage of the eyeglass frame. In the second method, the temples 3 are folded in a transverse direction about the hinge structure as normal. Conveniently, when the temples 3 are unfolded, the outer temples 32 can slide about the respective inner temples 31 and extend outward to form longer temples, and the magnets 4 at the rear ends of the two temples 3 mutually attract to form a loop structure suspendable on the neck, facilitating the taking on and off of presbyopia eyeglasses.

The descriptions illustrated supra set forth simply the preferred embodiments of the present disclosure; however, the characteristics of the present disclosure are by no means restricted thereto. All changes, alternations, or modifications conveniently considered by those skilled in the art are deemed to be encompassed within the scope of the present disclosure delineated by the following claims.

## Claims

1. A suspendable and rotatingly foldable eyeglass frame, comprising:
a rim structure (1);
two temples (3); and
two connection units (2);
wherein two ends of the rim structure (1) are respectively connected to the temples (3) by the connection units (2), the two ends of the rim structure (1) is each integrally formed with a teeth structure (11) perpendicular to the lenses, the lower ends of the connection units (2) each have a flange structure for engaging the respective teeth structure (11), the upper ends of the connection units (2) are respectively connected by hinge to the front portions of the temples (3), the rear ends of the temples (3) each have a magnet (4), the temples (3) each include an inner temple (31) and an outer temple (32), the inner temples (31) are respectively slidably arranged in the outer temples (32), the rear portions of the inner temples (31) each have a locking edge, the interiors of the front ends of the outer temples (32) each have a locking groove, and when one of the outer temples (32) slides about one of the inner temples (31) and the inner temple (31) is pulled out of the outer temple (32), the locking edge and the locking groove interact to restrict the outer temple (32) from sliding off of the inner temple (31).

2. The suspendable and rotatingly foldable eyeglass frame according to claim 1, wherein the flange structures at the lower ends of the connection units (2) and the teeth structures (11) at the two ends of the rim structure (1) respectively engage each other to form quasi-hinge structures, and each of the temples (3) is rotatable longitudinally along one of the quasi-hinge structure upward for folding or downward for unfolding toward the front of the eyeglass frame.

3. The suspendable and rotatingly foldable eyeglass frame according to claim 1, wherein the rim structure (1) is mounted with lenses, and the rim structure (1) is rotatable about a quasi-hinge structure upward for opening or downward for closing.

4. The suspendable and rotatingly foldable eyeglass frame according to claim 1, wherein the outer temples (32) are made of soft plastic, and the magnets (4) are respectively inlaid at the rear portions of the outer temples (32).

5. The suspendable and rotatingly foldable eyeglass frame according to claim 1, wherein the magnets (4) of the rear portions of the two temples (3) have opposite magnetic poles and mutually attract.

6. The suspendable and rotatingly foldable eyeglass frame according to claim 2, wherein the magnets (4) of the rear portions of the two temples (3) have opposite magnetic poles and mutually attract.

7. The suspendable and rotatingly foldable eyeglass frame according to claim 1, wherein the front portions of the temples (3) and the upper portions of the connection units (2) form hinge structures, and the temples (3) are foldable about the respective hinge structures in a transverse direction toward the front of the eyeglass frame.

8. The suspendable and rotatingly foldable eyeglass frame according to claim 1, wherein when the temples (3) are unfolded, each of the outer temples (32) extend about the respective inner temples (31) to form a longer temple, and the magnets (4) at the rear ends of the two temples (3) mutually attract to form a loop structure.

9. The suspendable and rotatingly foldable eyeglass frame according to claim 6, wherein when the temples (3) are unfolded, each of the outer temples (32) extend about the respective inner temples (31) to form a longer temple, and the magnets (4) at the rear ends of the two temples (3) mutually attract to form a loop structure.
